# EUROPEAN PATENT APPLICATION

(11) **EP 4 629 434 A1**
(43) Date of publication of application: **08.10.2025**
(21) Application number: 22966985.8
(22) Date of filing: 07.12.2022
(51) Int. Cl.: H01M 50/691, H01M 50/333

(54) **DRAIN VALVE FOR POWER BATTERY PACK**

(30) Priority: 30.11.2022 CN 202211514823
(71) Applicant: Panasian Microvent Tech (Jiangsu) Corporation, Changzhou, Jiangsu 213176 (CN)
(72) Inventor: ZHANG, Yun, hangzhou, Jiangsu 213176 (CN); WANG, Qi, hangzhou, Jiangsu 213176 (CN); XU, Bin, hangzhou, Jiangsu 213176 (CN); DING, Ronghua, hangzhou, Jiangsu 213176 (CN); QIN, Changying, hangzhou, Jiangsu 213176 (CN); YUAN, Ao, hangzhou, Jiangsu 213176 (CN)
(74) Representative: Becker Kurig & Partner Patentanwälte mbB
(86) International application number: PCT/CN2022/137199
(87) International publication number: WO 2024/113399

(57) **Abstract**

Disclosed is a drain valve for a power battery pack.. Gaps are formed between outer sides of the guide plates and the valve body, and guide grooves are formed in the outer sides of the guide plates. Liquid entering the valve body via the liquid inlet flows to the liquid-swellable body via gaps between the guide plates, and the liquid-swellable body swells to jack up the valve cover, such that the guide grooves are connected to an opening between the valve cover and the valve body to form a draining passage. The drain valve for a power battery pack optimizes the position of the draining passage and the swelling space of the liquid-swellable body to ensure that the space of the draining passages will not be affected by the liquid-swellable body in a swelling state, thus guaranteeing a normal draining function.

## Description

### BACKGROUND OF THE INVENTION

### 1. Technical Field

The invention relates to the field of explosion-proof valves, in particular to a drain valve for a power battery pack.

### 2. Description of Related Art

Power lithium ion battery packs for vehicles adopt a cooling system to cool or heat power lithium ion batteries to maintain a better operating temperature of the power lithium ion batteries so as to improve the operating efficiency of the power lithium ion batteries and prolong the life of the power lithium ion batteries. At present, natural cooling, air cooling, liquid cooling and direct cooling are mainly used for thermal management of a power lithium ion battery pack system for vehicles.

During liquid cooling, cooling liquid (such as glycol) is used as a heat-exchange medium. Generally, multiple different heat-exchange circuits are configured, for example, a heat sink circuit, an air-conditioning circuit and a PTC circuit are configured for Chevalier Volt. A battery management system performs corresponding regulation and switching according to a thermal management strategy.

However, under high-temperature oxidation of glycol in the cooling liquid, a hydroxy group will be acidized. During long-term operation and circulation at a temperature of 80°C-90°C, the glycol will be oxidized into glycolic acid and then oxidized into oxalic acid, the oxalic acid and the glycolic acid will corrode equipment and liquid cooling tubes. Particularly, because the liquid cooling tubes are made from aluminum foil or copper foil by welding, weld joints or defective positions on the surface of the liquid cooling tubes may be easily corroded, leading to leakage; and leaking glycol will result in faults, short circuits, thermal runaway and other phenomena of battery packs if it fails to be discharged out of the battery packs in time.

Existing drain valves realizes a draining function by means of liquid-swellable materials, such as Patent Application No.CN202220874209.0. However, the structural arrangement of the liquid-swellable material of the drain valve in this patent is inappropriate, and the liquid-swellable material will swell in all directions after absorbing liquid, leading to deformation of guide grooves in the surface of the liquid-swellable material, thus compromising the draining effect. After the liquid-swellable material is dried, the position of the liquid-swellable material will be changed, so the structural design of the swelling space is inappropriate, the design of a draining passage is inappropriate, and the selection of the swelling material is inappropriate.

### BRIEF SUMMARY OF THE INVENTION

The technical issue mainly to be settled by the invention is to provide a drain valve for a power battery pack, which optimizes the position of a draining passage and the swelling space of a liquid-swellable body to ensure that the space of the draining passage will not be affected by the liquid-swellable body in a swelling state to guarantee a normal draining function, and is simple in structure, safe and reliable.

To settle the above technical issue, one technical solution adopted by the invention is as follows: a drain valve for a power battery pack includes a valve body and a valve cover arranged above the valve body, a liquid inlet is formed in a circumferential direction of the valve body, a plurality of guide plates are arranged on the valve cover at intervals along a center of the valve cover, a liquid-swellable body is inlaid in a space defined by inner sides of the guide plates, gaps are formed between the outer sides of the guide plates and the valve body, guide grooves are formed in the outer sides of the guide plates, liquid entering the valve body via the liquid inlet flows to the liquid-swellable body via gaps between the guide plates, and the liquid-swellable body swells to jack up the valve cover, such that the guide grooves are connected to an opening between the valve cover and the valve body to form a draining passage.

In a preferred embodiment of the invention, the guide plates are arc plates, which are arranged in a vertical direction and protrude towards the center of the valve cover, the concave guide grooves are formed by the whole outer sides of the guide plates, and the liquid-swellable body is clamped by the inner sides of the guide plates.

In a preferred embodiment of the invention, a positioning plate is arranged at a lower end of the valve body, and the liquid-swellable body has an upper end in contact with the valve cover and a lower end in contact with the positioning plate.

In a preferred embodiment of the invention, an ejector rod is arranged in the valve body, a connecting pillar is arranged at a center of a bottom of the valve cover, a threaded hole is formed in the connecting pillar, an upper end of a connecting rod penetrates through the positioning plate and is connected into the threaded hole, and a return spring is connected between the ejection rod and the positioning plate.

In a preferred embodiment of the invention, a plurality of baffle plates are arranged at a lower end of the valve cover, and upper ends of the guide plates that are arranged at intervals are connected by means of the baffle plates to form an enclosure structure.

In a preferred embodiment of the invention, a step structure is arranged at an upper end of the valve body, an outer side of a bottom surface of the valve cover is attached to the step structure, the enclosure structure is attached to an inner side of the step structure, an inner sealing ring is arranged in the step structure, and a sealing surface is formed by the inner sealing ring and the bottom surface of the valve cover.

In a preferred embodiment of the invention, an outer sealing ring is arranged on an outer side of the valve body, a clamp nut is threadedly connected to the valve body, and a notch corresponding to the liquid inlet is formed in the clamp nut.

In a preferred embodiment of the invention, the liquid-swellable body is formed by a plurality of swellable sheets that are stacked or integrated together, and the swellable sheets are made from sodium polyacrylate/polyethylene terephthalate composite fibers or sodium polyacrylate/polytetrafluoroethylene composite fibers.

In a preferred embodiment of the invention, a thickness of the sodium polyacrylate/polyethylene terephthalate composite fibers is 0.1-3 mm, and a proportion of sodium polyacrylate fibers in the sodium polyacrylate/polyethylene terephthalate composite fibers is 10%-100%.

In a preferred embodiment of the invention, a thickness of the sodium polyacrylate/polytetrafluoroethylene composite fibers is 0.1-5 mm, and a proportion of sodium polyacrylate fibers in the sodium polyacrylate/polytetrafluoroethylene composite fibers is 10%-100%.

The invention has the following beneficial effects: according to the drain valve for a power battery box provided by the invention, the guide grooves are formed in the guide plates of the valve cover and connected to the opening between the valve cover and the valve body to form the draining passage, and the draining passage is separated from a liquid absorption passage of the liquid-swellable body, thus reducing the influence of the liquid-swellable body in a swelling state on the draining passage.

According to the drain valve for a power battery box provided by the invention, the liquid-swellable body is limited by the valve body, the valve cover and the guide plates and when swelling after liquid absorption, will not intrude into the space of the draining passage, thus guaranteeing an appropriate swelling space to keep the draining passage unblocked.

According to the drain valve for a power battery pack provided by the invention, the swellable sheets are stacked to form the liquid-swellable body and are made from the sodium polyacrylate/polyethylene terephthalate composite fibers or the sodium polyacrylate/polytetrafluoroethylene composite fibers, thus optimizing the material and structure of the liquid-swellable body.

### BRIEF DESCRIPTION OF THE SEVERAL VIEWS OF THE DRAWINGS

To more clearly explain the technical solutions in the embodiments of the invention, drawings used for describing the embodiment of the invention are briefly introduced below. Obviously, the drawings described below merely illustrate some embodiments of the invention, and those ordinarily skilled in the art may obtain other drawings according to the following ones without creative labor. Wherein:
FIG. 1 is a structural diagram of a preferred embodiment of a drain valve for a power battery pack according to the invention;
FIG. 2 is a front sectional view of the drain valve for a power battery pack;
FIG. 3 is a structural stereogram of a valve body;
FIG. 4 is a structural stereogram of a valve cover;
FIG. 5 is a stereoscopic sectional view of the valve cover and a liquid-swellable body;

Reference signs: 1, valve body; 11, liquid inlet; 12, connecting plate; 13, step structure; 2, valve cover; 21, guide plate; 211, guide groove; 22, connecting pillar; 3, clamp nut; 31, notch; 4, liquid-swellable body; 41, swellable sheet; 5, ejection rod; 6, return spring; 7, inner sealing ring; 8, outer sealing ring.

### DETAILED DESCRIPTION OF THE INVENTION

The technical solutions in the embodiments of the invention are clearly and completely described below. The structures, proportions and sizes in the accompanying drawings are merely used for explaining the contents disclosed here to assist those familiar with this technology in understanding and reading and are not used for defining implementation conditions of the invention, so they have no substantive meaning technically. Any modifications of the structures, changes in the proportions or adjustments of the sizes made without affecting the effects and goals fulfilled by the invention should also fall within the scope of the technical contents disclosed by the invention. In addition, terms such as "upper", "lower", "left", "right" and "middle" cited here are merely for the purpose of a clear description and are not intended to limit the implementation range of the invention, and all transformations or adjustments to the relative relations of these terms made without substantially changing the technical contents of the invention should also fall within the implementation range of the invention.

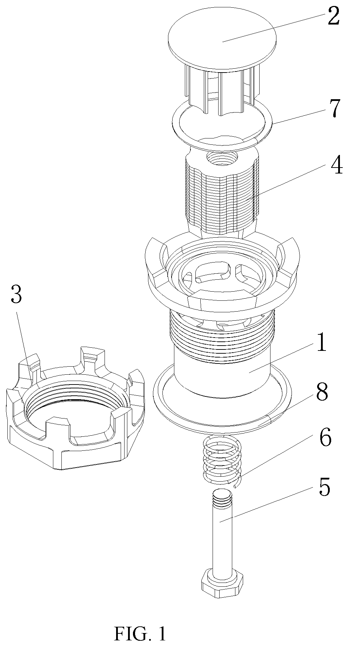

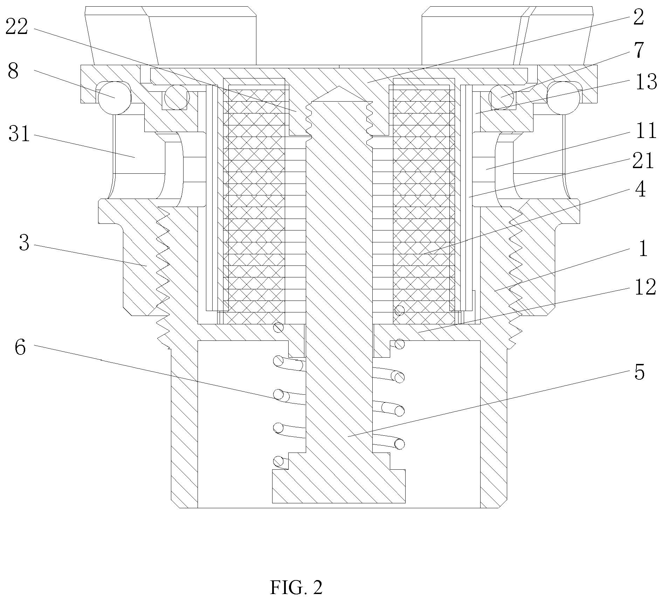

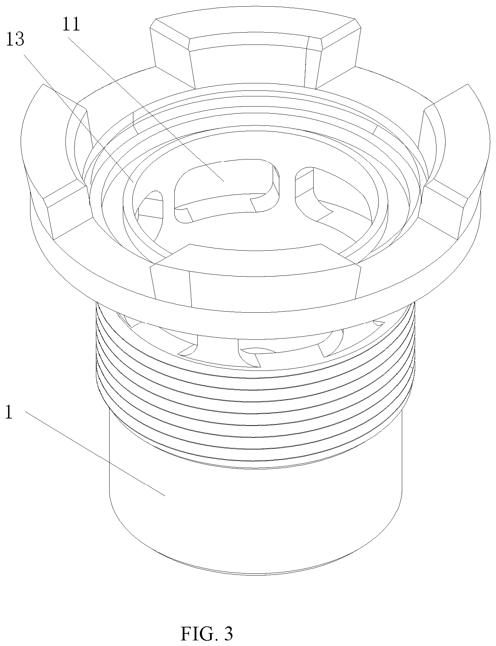

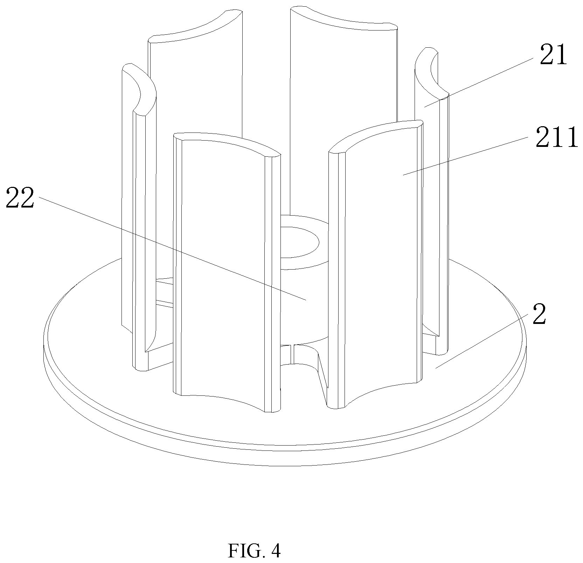

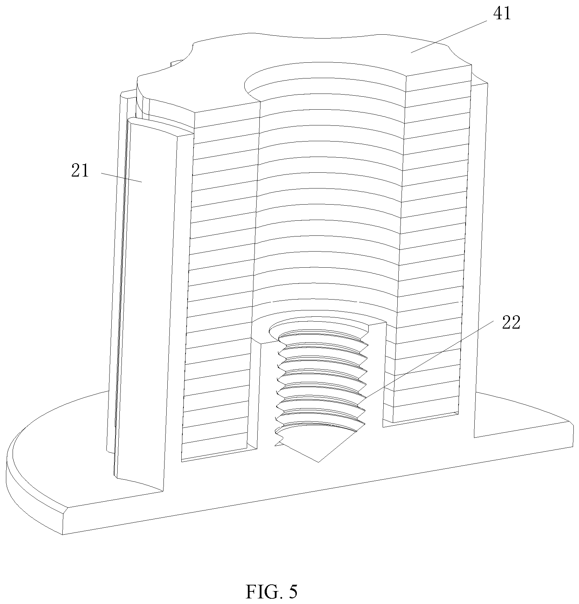

Referring to FIGS. 1-5, a drain valve for a power battery pack includes a valve body 1 and a valve cover 2 arranged above the valve body 1.

A liquid inlet 11 is formed in a circumferential direction of the valve body 1, and the liquid inlet 11 is kidney-shaped. Multiple liquid inlets 11 may be formed in the circumferential direction of the valve body 1. An outer sealing ring 8 is arranged on an outer side of the valve body 1, and a clamp nut 3 is threadedly connected to the valve body 1. The clamp nut 3 is provided with a notch 31 corresponding to the liquid inlet 11. The drain valve is installed on a power battery pack by means of the clamp nut 3 (the specific installation method is determined according to the structure of the power battery pack, and details will not be given here), and the notch 31 corresponds to the liquid inlet 11, such that the liquid inlet may be connected to the power battery pack without being blocked by the clamp nut 3. A positioning plate is arranged at a lower end of the valve body 1.

A plurality of guide plates 21 are arranged on the valve cover 2 along the center of the valve cover 2, the guide plates 21 are uniformly distributed at intervals around the center of the valve cover 2, the number of the guide plates 21 is 2, 3, 4, 5, 6, 7, 8 or more, the specific number of the guide plates is set according to the requirements of the drain valve, and in the drawings, six guide plates 21 are described as an optimal embodiment. A liquid-swellable body 4 is inlaid in a space defined by inner sides of the guide plates 21. An upper end of the liquid-swellable body 4 is in contact with the valve cover 2, and a lower end of the liquid-swellable body 4 is in contact with the positioning plate. The liquid-swellable body 4 is confined between the valve body 1 and the valve cover 2. During installation, first, the liquid-swellable body 4 is corresponding installed on the valve cover 2, and a circumferential portion of the liquid-swellable body 4 is in contact with the guide plates 21 and blocked by the guide plates 21. Then, the valve cover 2 is installed in the valve body 1, and after the valve cover 2 is installed in place, the lower end of the liquid-swellable body 4 exactly comes in contact with the positioning plate, such that the position of the liquid-swellable body 4 is limited in the vertical direction by the valve cover 2 and the positioning plate.

Gaps are formed between outer sides of the guide plates 21 and the valve body 1, and guide grooves 211 are formed in the outer sides of the guide plates 21. The guide plates 21 are arc plates, which are arranged in the vertical direction and protrude towards the center of the valve cover 2, the concave guide grooves 211 are formed by the whole outer sides of the guide plates 21, and the liquid-swellable body 4 is clamped by the inner sides of the guide plates 21. Liquid entering the valve body 1 via the liquid inlet 11 flows to the liquid-swellable body 4 via gaps between the guide plates 21, and the liquid-swellable body 4 swells to jack up the valve cover 2, such that the guide grooves 211 are connected to an opening between the valve cover 2 and the valve body 1 to form a draining passage. Because the gaps are formed between the guide plates 21 and the valve body 1, when cooling liquid leaks from a power battery, the cooling liquid, after flowing into the valve body 1 via the liquid inlet 11, will flow to the liquid-swellable body 4 along the gaps between the guide plates 21, at this moment, the liquid-swellable body 4 will swell and jack up the valve cover 2 in the vertical direction, and the opening is formed between the valve body 1 and the valve cover 2. Because the guide plates 21 are arc-shaped and the liquid-swellable body 4 is guided by two wings of each guide plate 21, the liquid-swellable body 4 will swell towards the valve body 1 via the gaps between the guide plates 21. In this way, swelling of the liquid-swellable body 4 in the circumferential direction is limited by the guide plates 21, the liquid-swellable body 4 will not intrude into the guide grooves 211 in the outer sides of the guide plates 21, and a liquid flow space between the guide grooves 211 and the valve body 1 is maintained and works together with the concave guide grooves 211 to allow the cooling liquid to flow out of the valve body 1 along the guide grooves 211 via the opening between the valve cover 2 and the valve body 1. By means of the guide plates 21, the valve cover 2 and a connecting plate 12, the space for swelling deformation of the liquid-swellable body 4 is appropriately and strictly limited, and under the condition that the liquid-swellable body 4 deforms to jack up the valve cover 2, the guide grooves 211 will not be blocked by circumferential deformation of the liquid-swellable body 4 to keep the draining passage unblocked, thus guaranteeing a stable draining effect. After draining is completed or the liquid-swellable body 4 is naturally dried, the liquid-swellable body 4 restores, and the position of the liquid-swellable body 4 after restoration will not be changed under the action of the limiting structure.

An ejection rod 5 is arranged in the valve body 1. A connecting pillar 22 is arranged at the center of the bottom of the valve cover 2, and a threaded hole is formed in the connecting pillar 22. An upper end of a connecting rod penetrates through the positioning plate and is connected into the threaded hole. A return spring 6 is connected between the ejection rod 5 and the positioning plate. After the valve cover 2 is installed in place, a pull rod penetrates through the connecting plate 12 and is threadedly connected into the threaded hole in the connecting pillar 22, the return spring 6 applies a downwards pulling force to the valve cover 2 to ensure that the drain valve is in a normal state, the space between the valve cover 2 and the valve body 1 is sealed, and the situation where outside air enters a power battery pack from the valve body 1 due to a poor sealing effect between the valve body 1 and the valve cover 2 is avoided, thus reducing the influence of outside air on the power battery pack.

A step structure 13 is arranged at an upper end of the valve body 1, an outer side of a bottom surface of the valve cover 2 is attached to the step structure 13, an inner sealing ring 7 is arranged in the step structure 13, and a sealing surface is formed by the inner sealing ring 7 and the bottom surface of the valve cover 2. When the valve cover 2 moves upwards, under the action of the step structure 13, the guide plates 21 move upwards and downwards stably at the position of the step structure 13, and the center of the valve cover 2 will not deviate in the vertical direction. The space between the valve body 1 and the valve cover 2 is sealed by the inner sealing ring 7 to prevent outside air from entering the valve body 1. An enclosure structure 24 is arranged to wrap and fix the upper end of the liquid-swellable body 4, such that when the liquid-swellable body 4 swells, the upper end of the liquid-swellable body 4 will swell and deform upwards to push the valve cover 2 to move upwards.

The liquid-swellable body 4 is formed by a plurality of swellable sheets 41 that are stacked or integrated together, and the swellable sheets 41 are made from sodium polyacrylate/polyethylene terephthalate composite fibers or sodium polyacrylate/polytetrafluoroethylene composite fibers. The proportion of the two different types of swellable sheets 41 is set according to the liquid absorption rate and the swelling rate after liquid absorption of a glycol/water mixed solution. The thickness of the sodium polyacrylate/polyethylene terephthalate composite fibers is 0.1-3 mm, and the proportion of sodium polyacrylate fibers in the sodium polyacrylate/polyethylene terephthalate composite fibers is 10%-100%. The thickness of the sodium polyacrylate/polytetrafluoroethylene composite fibers is 0.1-5 mm, and the proportion of sodium polyacrylate fibers in the sodium polyacrylate/polytetrafluoroethylene composite fibers is 10%-100%.

The liquid-swellable body 4 may be integrally formed by the sodium polyacrylate/polyethylene terephthalate composite fibers and the sodium polyacrylate/polytetrafluoroethylene composite fibers, and the proportion of the two types of materials is set according to the liquid absorption rate and the swelling rate after liquid absorption of the glycol/water mixed solution.

Different from the prior art, the drain valve for a power battery pack provided by the invention optimizes the position of the draining passage and the swelling space of the liquid-swellable body to ensure that the space of the draining passages will not be affected by the liquid-swellable body in a swelling state, thus guaranteeing a normal draining function; and the drain valve for a power battery pack is simple in structure, safe and reliable.

The invention and an embodiment thereof are described above by way of examples, the above description is not restrictive, the structures in the drawings merely illustrate one embodiment of the invention, and the actual structures are not limited to the structures here. Therefore, structures and embodiments, similar to the technical solution described above, creatively designed by those ordinarily skilled in the art under the enlightenment of the above description without departing from the creative concept of the invention should also fall within the protection scope of the invention.

## Claims

1. A drain valve for a power battery pack, comprising a valve body and a valve cover arranged above the valve body, wherein a liquid inlet is formed in a circumferential direction of the valve body, a plurality of guide plates are arranged on the valve cover at intervals along a center of the valve cover, a liquid-swellable body is inlaid in a space defined by the inner sides of the guide plates, gaps are formed between the outer sides of the guide plates and the valve body, guide grooves are formed in the outer sides of the guide plates, liquid entering the valve body via the liquid inlet flows to the liquid-swellable body via gaps between the guide plates, and the liquid-swellable body swells to jack up the valve cover, such that the guide grooves are connected to an opening between the valve cover and the valve body to form a draining passage.

2. The drain valve for a power battery pack according to Claim 1, wherein the guide plates are arc plates, which are arranged in a vertical direction and protrude towards the center of the valve cover, the concave guide grooves are formed by the whole outer sides of the guide plates, and the liquid-swellable body is clamped by the inner sides of the guide plates.

3. The drain valve for a power battery pack according to Claim 2, wherein a positioning plate is arranged at a lower end of the valve body, and the liquid-swellable body has an upper end in contact with the valve cover and a lower end in contact with the positioning plate.

4. The drain valve for a power battery pack according to Claim 3, wherein an ejector rod is arranged in the valve body, a connecting pillar is arranged at a center of a bottom of the valve cover, a threaded hole is formed in the connecting pillar, an upper end of a connecting rod penetrates through the positioning plate and is connected into the threaded hole, and a return spring is connected between the ejection rod and the positioning plate.

5. The drain valve for a power battery pack according to any one of Claims 1 wherein a plurality of baffle plates are arranged at a lower end of the valve cover, and upper ends of the guide plates that are arranged at intervals are connected by means of the baffle plates to form an enclosure structure.

6. The drain valve for a power battery pack according to Claim 5, wherein a step structure is arranged at an upper end of the valve body, an outer side of a bottom surface of the valve cover is attached to the step structure, the enclosure structure is attached to an inner side of the step structure, an inner sealing ring is arranged in the step structure, and a sealing surface is formed by the inner sealing ring and the bottom surface of the valve cover.

7. The drain valve for a power battery pack according to Claim 6, wherein an outer sealing ring is arranged on an outer side of the valve body, a clamp nut is threadedly connected to the valve body, and a notch corresponding to the liquid inlet is formed in the clamp nut.

8. The drain valve for a power battery pack according to Claim 1, wherein the liquid-swellable body is formed by a plurality of swellable sheets that are stacked or integrated together, and the swellable sheets are made from sodium polyacrylate/polyethylene terephthalate composite fibers or sodium polyacrylate/polytetrafluoroethylene composite fibers.

9. The drain valve for a power battery pack according to Claim 8, wherein a thickness of the sodium polyacrylate/polyethylene terephthalate composite fibers is 0.1-3 mm, and a proportion of sodium polyacrylate fibers in the sodium polyacrylate/polyethylene terephthalate composite fibers is 10%-100%.

10. The drain valve for a power battery pack according to Claim 8, wherein a thickness of the sodium polyacrylate/polytetrafluoroethylene composite fibers is 0.1-5 mm, and a proportion of sodium polyacrylate fibers in the sodium polyacrylate/polytetrafluoroethylene composite fibers is 10%-100%.
